# EUROPEAN PATENT SPECIFICATION

(11) **EP 2 960 188 B1**
(45) Date of publication and mention of the grant of the patent: **03.05.2017**
(21) Application number: 14174727.9
(22) Date of filing: 27.06.2014
(51) Int. Cl.: B65G 47/28, B65G 47/31, B65G 47/84

(54) **Conveying unit for conveying packages and method for conveying packages**
Fördereinheit zur Förderung von Verpackungen und Verfahren zur Förderung von Verpackungen
Unité de convoyage permettant d'acheminer des paquets et procédé permettant d'acheminer des paquets

(43) Date of publication of application: 30.12.2015
(73) Proprietor: Tetra Laval Holdings & Finance S.A., 1009 Pully (CH)
(72) Inventor: Borasi, Gabriele, 41057 Spilamberto (IT)
(74) Representative: Tetra Pak - Patent Attorneys SE

(56) References cited:
- EP-A1- 1 462 370
- WO-A1-97/04953
- US-A1- 2003 093 972
- US-A1- 2007 209 909
- US-A1- 2010 038 209

## Description

The invention relates to a conveying unit for conveying packages.

The invention also relates to a method for conveying packages.

In particular, the invention relates to a conveying unit - and a method - for conveying packages towards a cap applicator that applies an opening device to each package.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may comprise a layer of fibrous material, e.g. paper, or of mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH), which is superimposed on a layer of heat-seal plastic material, and is in turn covered with another layer of heat-seal plastic material forming the inner face of the package eventually contacting the food product.

As is known, packages of this sort are produced on fully automatic packaging machines, on which a continuous tube is formed from the web-fed packaging material; the web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is folded and sealed longitudinally to form a vertical tube.

The tube is filled continuously downwards with the sterilized or sterile-processed food product, and is sealed and then cut along equally spaced cross sections to form pillow packs, which are then fed to a folding unit to form the finished, e.g. substantially parallelepiped-shaped packages.

Each of the formed, filled and sealed packages may be provided with an opening device.

The opening device usually comprises a frame having a flange intended to be attached to the package and a neck defining a pouring opening through which the product contained in the package may be poured. The opening device further comprises a lid fitted to the neck, which is removed from the neck when the product has to be poured and is applied again to the neck to re-close the pouring opening.

The packaging material forming the package may comprise a so called prelaminated hole, which is a hole formed in the base layer only and covered by the other lamination layers, i.e. the layers of heat-seal plastic material and the layer of gas- and light-barrier material.

In this case the opening device is applied to the package at the prelaminated hole and is provided with a cutter which - when the package is opened for the first time - cuts the prelaminated hole to allow pouring of the product contained in the package. The cutter may be driven by the lid. In particular, opening devices are known in which the lid is initially screwed to the neck. When the lid is unscrewed for the first time a cam device, defined by the lid, the cutter and the neck, drives the cutter so that the cutter cuts the prelaminated hole.

The opening devices are applied to the packages by cap applicators that are arranged downstream of the above-mentioned packaging machines.

The cap applicators are provided with an applying unit having a plurality of applying devices that apply the opening devices to the packages. In particular, the opening devices may be attached to the package by gluing.

The packages are advanced through the cap applicator in a line. Each opening device is carried by a respective applying device to a glue delivery station where a certain amount of glue is placed on the flange of the opening device. Subsequently, the applying device applies the opening device to the package, in particular at the prelaminated hole of the package, if present.

The cap applicator further comprises a plurality of pressing devices, each pressing device pushing the respective opening device onto the package until the glue sets and the opening device is permanently attached to the package.

The cap applicators further comprise a conveying unit that receives the packages from the packaging machines and conveys the packages towards the applying unit.

The conveying unit comprises a conveyor belt that supports the packages and conveys the packages along an advancing direction. The conveyor belt has the shape of a loop and is wound around pulleys, each pulley rotating around a substantially horizontal axis. The conveyor belt comprises an upper active branch, which receives and moves the packages, and a lower return branch.

The conveying unit also comprises a so called belt brake, i.e. a device which interacts with the packages and releases the packages one at a time, so that the packages are substantially equally spaced along the conveyor belt. In other words, the belt brake creates substantially constant gaps between the packages. The packages, in fact, should be arranged at a pre-defined distance from each other in order that the applying devices of the applying unit can properly apply the opening devices.

The conveying unit further comprises a first conveying element and a second conveying element arranged on opposite sides of the conveyor belt.

The first conveying element comprises a first belt shaped as a loop and wound around pulleys, each pulley having a substantially vertical axis.

The first conveying element comprises a plurality of first fingers projecting from the belt.

The second conveying element comprises a belt shaped as a loop and wound around pulleys, each pulley having a substantially vertical axis.

The second conveying element comprises a plurality of second fingers projecting from the belt.

The first belt and the second belt comprise guiding branches facing each other.

The first conveying element is longer than the second conveying element and is arranged closer to the belt brake than the second conveying element. The first conveying element, therefore, interacts with the packages before the second conveying element.

During operation, a package coming from the belt brake is accelerated by the conveyor belt unit to cause a front wall of the package to abut against a respective first finger of the first conveying element. Subsequently, a second finger of the second conveying element faces, or contacts, a rear wall of the package, opposite to the above-mentioned front wall. In this way, the package is received in a sort of compartment defined by the first belt, the second belt, the first finger and the second finger and is advanced towards the applying unit.

In order that the package abuts against the first finger and is kept in contact with the first finger the speed of the conveyor belt has to be grater than the speed of the first belt and the second belt.

In particular, the speed of the conveyor belt may be 15% greater than the speed of the first belt and the second belt and greater than 20 meters per minute.

A drawback of the known conveying units is that since the conveyor belt moves at a very high speed, it may be difficult to control the position of the packages. In particular, if the conveyor belt is not sufficiently clean - for instance if the conveyor belt is dirty or wet - the packages may slide, or slip, on the conveyor belt. In one case, the package may be too fast, and so bounce, on the respective first finger. In another case, the package may be too slow and so not able to reach the respective first finger.

Another drawback of the known conveying units is that, due to the high speed of the conveyor belt, the packages - especially in case they have a square or rounded cross section - may rotate around their longitudinal axis. In this way, the packages may be improperly positioned with respect to the applying unit.

EP1462370 discloses a unit for applying opening devices to packages of pourable food products having a pierceable portion, the unit substantially having conveying means for feeding the packages successively along a given path; and gripping means for receiving the opening devices at a pickup station, and which move cyclically between the pickup station and an application station interfacing with the path and where the opening devices are applied to respective packages; the trajectory of the gripping means from the application station to the pickup station is distinct from the path (P1) of the packages; and the unit also comprises pressure means generating a contact pressure between the packages and the opening devices as of the application station and along at least a portion of the path of the packages.

An object of the invention is to improve the conveying units for conveying packages, in particular the conveying units for conveying packages towards cap applicators that apply opening devices to the packages.

Another object of the invention is to provide a conveying unit for conveying packages and a method for conveying packages that allow a good control of the speed and the position of the packages.

A further object of the invention is to provide a conveying unit for conveying packages and a method for conveying packages that allow reducing, or eliminating, the risk that the packages rotate around their longitudinal axis.

Still another object of the invention is to provide a conveying unit for conveying packages and a method for conveying packages in which the packages are guided in a more precise and reliable way than in the known conveying units.

According to a first aspect of the invention, there is provided a conveying unit for conveying packages as claimed in claim 1.

According to a second aspect of the invention, there is provided a method for conveying packages as claimed in claim 15.

A preferred, non-limiting embodiment of the present invention will be described by way of example with reference to the accompanying drawings, in which:
Figure 1 is a plan view, with some details removed for clarity, of a conveying unit according to the invention;
Figure 2 is a perspective side view of the conveying unit of Figure 1.

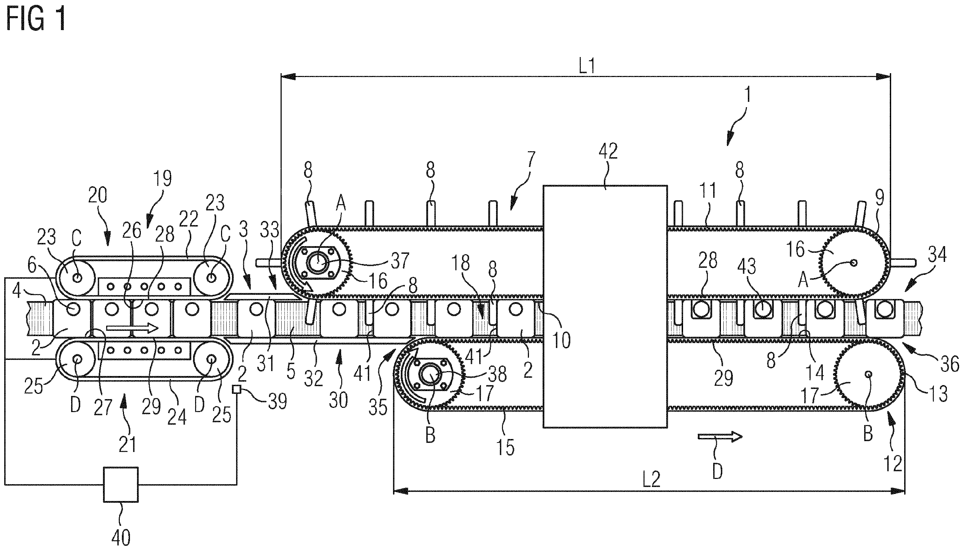

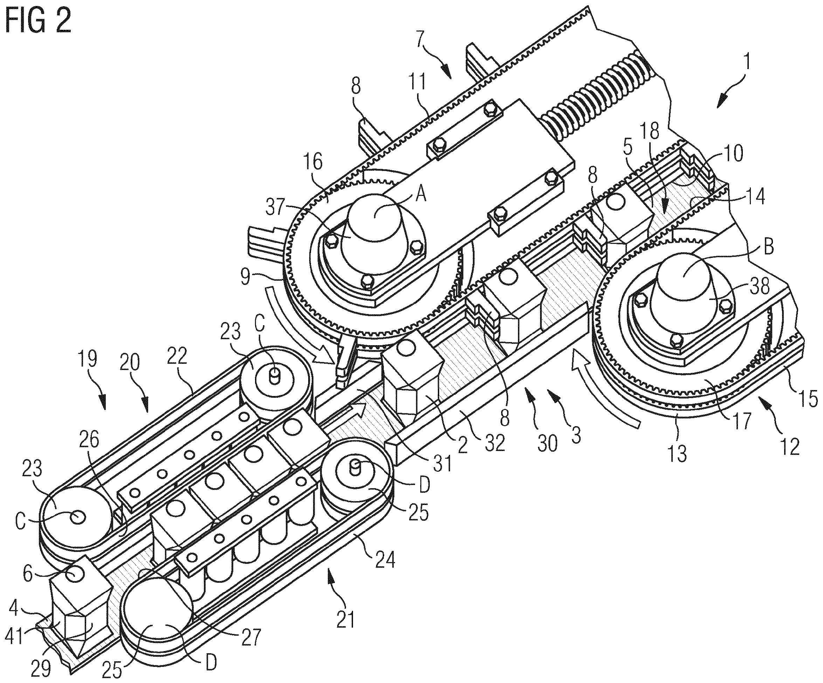

With reference to Figures 1 and 2 there is shown a conveying unit 1 for conveying packages 2.

In one embodiment, the conveying unit 1 is part of an applying machine, i.e. a so called cap applicator, comprising an applying unit 42 that applies opening devices 43 to the packages 2, in particular at prelaminated holes 6 of the packages 2.

The conveying unit 1 comprises a conveying device 3 that supports the packages 2 and advances the packages 2 along an advancing direction D.

The conveying device 3 comprises a flexible conveying arrangement, for example a conveyor belt 4 having the shape of a loop and wound around pulleys (not shown) having substantially horizontal axis. The conveyor belt 4 comprises an upper active branch 5 supporting and advancing the packages 2 and a lower return branch (not shown), opposite to the upper active branch 5.

The conveying unit 1 further comprises a first conveying element 7 positioned on one side of the conveying device 3 and provided with projecting elements 8 protruding from the first conveying device 7 and arranged for interacting with the packages 2.

The first conveying element 7 comprises a first flexible conveying arrangement, for example a first conveyor belt 9 having the shape of a loop and wound around pulleys 16 having substantially vertical axis A. The first conveyor belt 9 comprises a first active branch 10 facing towards the conveying device 3 and a first return branch 11 opposite to the first active branch 10.

The projecting elements 8 extend from the first conveyor belt 9.

The conveying unit 1 further comprises a second conveying element 12 positioned on another side of the conveying device 3, opposite to the above-mentioned side.

The second conveying element 12 comprises a second flexible conveying arrangement, for example a second conveyor belt 13 having the shape of a loop and wound around second pulleys 17 having substantially vertical axis B. The second conveyor belt 13 comprises a second active branch 14 facing towards the conveying device 3 and a second return branch 15 opposite to the second active branch 14.

The first conveying element 7 and the second conveying element 12 are arranged on opposite sides of the conveying devices 3, the first active branch 10 and the second active branch 14 facing each other and defining, together with a the conveying device 3, a channel 18 for the packages 2.

The first conveying element 7 has a first length L1 measured along direction D.

The second conveying element 12 has a second length L2 measured along direction D.

The first length L1 is greater than the second length L2.

The conveying unit 1 comprises a driving arrangement, for example a motor (not shown) that drives the conveyor belt 4 at a first speed.

The conveying unit 1 also comprises a first driving unit 37, for example a first motor, which drives the first conveyor belt 9 at a second speed.

The second speed is greater than the first speed.

In one embodiment, the second speed may be in the range of 15-50 meters per minute. In particular, the second speed may be about 20 meters per minute.

The conveying unit further comprises a second driving unit 38, for example a second motor, which drives the second conveyor belt 13 at a third speed. The third speed is greater than the first speed. The third speed is equal to the second speed.

The conveying unit 1 further comprises a sequencing device 19 that arranges the packages 2 on the conveyor belt 4 at a preset distance from each other.

The sequencing device 19 - a so-called belt brake - comprises a first belt unit 20 and a second belt unit 21 arranged on opposite sides of the conveyor belt 4. The sequencing device 19 creates a queue of packages 2, i.e. a group of packages having no gaps therebetween, and releases the packages 2 one at a time. In this way, the packages 2 are substantially equally spaced one the conveyor belt 4.

The first belt unit 20 comprises a plurality of first belts 22 wound around first pulley elements 23 having substantially vertical axis C. The first belts 22 have first working branches 26 facing towards the conveying device 3.

The second belt unit 21 comprises a plurality of second belts 24 wound around second pulley elements 25 having substantially vertical axis D. The second belts 24 have second working branches 27 facing towards the conveying device 3.

The first belts 22 interact with a first side region 28 of the packages 2.

The second belts 24 interact with a second side region 29 of the packages 2, opposite to the first side region 28.

The first belts 22 and the second belts 24 are driven at a speed that is smaller than the above-mentioned first speed, i.e. the speed of the conveyor belt 4. In one embodiment, the speed of the first belts 22 and the second belts 24 is about 7 meters per minute (this is the nominal value, as such speed may be instantly increased, or decreased, as will better explained below, to control the position of the packages).

The sequencing device 19 comprises a control unit having a sensor 39, for example a photocell, which detects the position of the packages 2 and compares the position detected by the sensor 39 with a reference position. If the detected position differs from the reference position the control unit accelerates, or decelerates, the first belts 22 and the second belts 24 - and consequently the packages 2 - so that the packages 2 are released by the sequencing unit 19 with a constant gap therebetween.

The first conveying element 7 has a first inlet zone 33, at which it starts interacting with the packages 2, and a first outlet zone 34, at which it stops interacting with the packages 2, i.e. it releases the packages 2.

The second conveying element 12 has a second inlet zone 35, at which it starts interacting with the packages 2, and a second outlet zone 36, at which it stops interacting with the packages 2, i.e. it releases the packages 2.

The first conveying element 7 and the second conveying element 12 face one another and are arranged in such a way that the first inlet zone 33 is closer to the sequencing device 19 than the second inlet zone 35, along direction D. The first outlet zone 34 is substantially at the same distance from the sequencing device 19 as the second outlet zone 36, along direction D. In other words, the first outlet zone 34 and the second outlet zone 36 are arranged one in front of the other.

The conveying unit 1 comprises a guide arrangement 30 arranged to guide the packages 2 before the packages 2 interact with the first conveying element 7.

The guide arrangement 30 is also arranged to guide the packages 2 during first interaction of the packages 2 with the projecting elements 8.

The guide arrangement 30 is further arranged to guide the packages 2 before the packages 2 interact with the second conveying element 12.

The guide arrangement 30 comprises a first guide element 31 arranged on the same side of the conveying device 3 as said first conveying element 7 and a second guide element 32 arranged on the same side of the conveying device 3 as said second conveying element 12. In other words, the first guide element 31 and the second guide element 32 are arranged on opposite sides of the conveying device 3.

The guide arrangement 30 extends between the sequencing device 19, on one side, and the first conveying element 7 and the second conveying element 12, on the other side.

The first guide element 31 is shorter than the second guide element 32, since the first inlet zone 33 is closer to the sequencing device 19 than the second inlet zone 35.

The guide arrangement 30 is arranged partly below the first conveying element 7. In this way, the projecting elements 8 do not interfere with the first guide element 31.

During operation, the sequencing unit 19 releases a line of packages 2 separated from each other by a defined distance.

The packages 2 are advanced by the conveyor belt 4.

The packages 2 reach the first inlet zone 33 where a projecting element 8 interacts with a corresponding package 2.

Due to the fact that the above-mentioned second speed, i.e. the speed of the first conveyor belt 9 - and, therefore the speed of the projecting element 8 - is greater than the above-mentioned first speed, i.e. the speed of the conveyor belt 4, the projecting element 8 interacts with a rear wall 41 of the package 2 and pushes the package 2 along direction D. The rear wall 41 is positioned downstream of the first side region 28 and the second side region 29 along the advancing direction D.

In this way the packages are smoothly accelerated.

In one embodiment, the above-mentioned first speed, i.e. the speed of the conveyor belt 4, is 15-25% smaller than the above-mentioned second speed, i.e. the speed of the first conveyor belt 9, and therefore the speed of the projecting element 8. In particular, the above-mentioned first speed, i.e. the speed of the conveyor belt 4, is 20% smaller than the above-mentioned second speed, i.e. the speed of the first conveyor belt 9, and therefore the speed of the projecting element 8.

In such an embodiment, the above-mentioned first speed, i.e. the speed of the conveyor belt 4, is 15-25% smaller than the above-mentioned third speed, i.e. the speed of the second conveyor belt 13. In particular, the above-mentioned first speed, i.e. the speed of the conveyor belt 4, is 20% smaller than the above-mentioned third speed, i.e. the speed of the second conveyor belt 13.

Subsequently, the package 2 reaches the second inlet zone 35 where the package 2 interacts with the second conveyor belt 13. In particular, the package is kept by the first active branch 10 and by the second active branch 14 at the first side region 28 and at the second side region 29, respectively. In addition, the package 2 is pushed by the projecting element 8.

In order to properly retain the package 2 the second conveying belt 13 is a high grip (high friction) belt.

In this way, since the speed of the conveyor belt 4 is smaller than in the known conveying units, the position of the packages 2 may be more easily controlled. The position of the packages 2, in fact, is less affected by the presence of dirt or water on the conveyor belt 4.

Moreover, the conveying unit according to the invention is simpler than the known conveying units since the second conveyor belt 13 is not provided with fingers that face, or contact, a rear wall of the packages.

The guide arrangement 30, i.e. the first guide element 31 and the second guide element 32 guide the package 2 whilst the package 2 is transferred by the conveying belt 4 from the sequencing device 19 to the first conveying element 7 and the second conveying element 12.

In this way, the package is prevented from rotating around its longitudinal axis.

Clearly, changes may be made to conveying unit 1 and to the method for conveying packages without, however, departing from the protective scope defined in the accompanying claims.

## Claims

1. Conveying unit for conveying packages (2), comprising a conveying device (3) that supports said packages (2) and advances said packages (2) along an advancing direction (D), a first conveying element (7) and a second conveying element (12) arranged on opposite sides of said conveying device (3), said first conveying element (7) comprising projecting elements (8) protruding from said first conveying element (7) and arranged for interacting with said packages (2), said conveying unit further comprising a driving arrangement that drives said conveying device (3) along said advancing direction (D) at a first speed and a first driving unit (37) that drives said first conveying element (7) along said advancing direction (D) at a second speed, wherein said second speed is greater than said first speed so that, in use, said projecting elements (8) pushes said packages (2) along said advancing direction (D), said first conveying element (7) having a first length (L1) measured along said advancing direction (D), said second conveying element (12) having a second length (L2) measured along said advancing direction (D), said first length (L1) being greater than said second length (L2), said conveying unit further comprising a sequencing device (19) that arranges said packages (2) on said conveying device (3) at a preset distance from each other, said first conveying element (7) having a first inlet zone (33), at which it starts interacting with said packages (2), said second conveying element (12) having a second inlet zone (35), at which it starts interacting with said packages (2), said first conveying element (7) and said second conveying element (12) facing one another and being arranged in such a way that said first inlet zone (33) is closer to said sequencing device (19) than said second inlet zone (35), along said advancing direction (D).

2. Conveying unit according to claim 1, wherein said first speed is 15-25% smaller than said second speed.

3. Conveying unit according to claim 2, wherein said first speed is 20% smaller than said second speed.

4. Conveying unit according to claim 1, or 2, wherein said second speed is in the range of 15-50 meters per minute.

5. Conveying unit according to any one of the preceding claims, and further comprising a second driving unit (38) that drives said second conveying element (12) along said advancing direction (D) at a third speed, said third speed being greater than said first speed.

6. Conveying unit according to claim 5, wherein said third speed is equal to said second speed.

7. Conveying unit according to any one of the preceding claims, wherein said second conveying element (7) comprises a high grip belt (13) arranged to interact with said packages (2).

8. Conveying unit according to any one of the preceding claims, and further comprising a guide arrangement (30) arranged to guide said packages (2) before said packages (2) interact with said first conveying element (7), during first interaction of said packages (2) with said projecting elements (8) and before said packages (2) interact with said second conveying element (12).

9. Conveying unit according to claim 8, wherein said guide arrangement (30) comprises a first guide element (31) arranged on the same side of said conveying device (3) as said first conveying element (7), and a second guide element (33) arranged on the same side of said conveying device (3) as said second conveying element (12).

10. Conveying unit according to claim 9, wherein said first guide element (31) is positioned partly below said first conveying element (7) so that, in use, said projecting elements (8) do not interfere with said first guide element (31).

11. Conveying unit according to claim 9, or 10, wherein said sequencing device (19) is positioned upstream of said first conveying device (7) and of said second conveying device (12) along said advancing direction (D) and is arranged for creating a gap between said packages (2) on said conveying device (3), said first guide element (31) being interposed between said sequencing device and said first conveying element (7) and said second guide element (32) being interposed between said sequencing device and said second conveying element (12).

12. Conveying unit according to any one of the preceding claims, wherein said conveying device (3) comprises a flexible conveying arrangement (4) wound around pulley elements having substantially horizontal axis, said first conveying element (7) comprises a first flexible conveying arrangement (9) wound around pulley elements (16) having substantially vertical axis (A) and said second conveying element (12) comprises a second flexible conveying arrangement (13) wound around pulley elements (17) having substantially vertical axis (B).

13. Conveying unit according to claim 12, wherein said first flexible conveying arrangement (9) comprises a first active branch (10) arranged to interact, in use, with a first side region (28) of said packages (2), said second flexible conveying arrangement (13) comprises a second active branch (14) arranged to interact, in use, with a second side region (29) of said packages (2), said projecting element (8) being arranged to interact, in use, with a rear wall (41) of said packages (2) positioned downstream of said first side region (28) and said second side region (29) along said advancing direction (D).

14. Applying apparatus for applying opening devices (43) to packages (2), comprising an applying unit (42) for applying said opening devices (43) to said packages (2) and a conveying unit (1) according to any one of claims 1 to 13.

15. Method for conveying packages (2), comprising the step of supporting said packages (2) on a conveying device (3) and advancing said packages (2) along an advancing direction (D), the step of providing a first conveying element (7) and a second conveying element (12) arranged on opposite sides of said conveying device (12), said first conveying element (7) comprising projecting elements (8) protruding from said conveying element (8) and arranged for interacting with said packages (2), the method further comprising the step of driving said conveying device (3) along said advancing direction (D) at a first speed and the step of further driving said first conveying element (7) along said advancing direction (D) at a second speed, wherein
said second speed if greater than said first speed so that, in use, said projecting elements (8) pushes said packages (2) along said advancing direction (D), said first conveying element (7) having a first length (L1) measured along said advancing direction (D), said second conveying element (12) having a second length (L2) measured along said advancing direction (D), said first length (L1) being greater than said second length (L2), said method further comprising the step of arranging said packages (2) on said conveying device (3) at a preset distance from each other by means of a sequencing device (19), said first conveying element (7) having a first inlet zone (33), at which it starts interacting with said packages (2), said second conveying element (12) having a second inlet zone (35), at which it starts interacting with said packages (2), said first conveying element (7) and said second conveying element (12) facing one another and being arranged in such a way that said first inlet zone (33) is closer to said sequencing device (19) than said second inlet zone (35), along said advancing direction (D).

## Patentansprüche

1. Fördereinheit zum Befördern von Packungen (2), die Folgendes umfasst: eine Fördervorrichtung (3), die die Packungen (2) trägt und die Packungen (2) entlang einer Vorwärtsrichtung (D) vorwärtsbewegt, ein erstes Förderelement (7) und ein zweites Förderelement (12), die auf gegenüberliegenden Seiten der Fördervorrichtung (3) angeordnet sind, wobei das erste Förderelement (7) vorstehende Elemente (8) umfasst, die von dem ersten Förderelement (7) vorstehen und für eine Wechselwirkung mit den Packungen (2) ausgelegt sind, wobei die Fördereinheit ferner eine Antriebsanordnung, die die Fördervorrichtung (3) entlang der Vorwärtsrichtung (D) mit einer ersten Geschwindigkeit antreibt, und eine erste Antriebseinheit (37) umfasst, die das erste Förderelement (7) entlang der Vorwärtsrichtung (D) mit einer zweiten Geschwindigkeit antreibt, wobei die zweite Geschwindigkeit höher als die erste Geschwindigkeit ist, so dass im Einsatz die vorstehenden Elemente (8) die Packungen (2) entlang der Vorwärtsrichtung (D) schieben, wobei das erste Förderelement (7) eine entlang der Vorwärtsrichtung (D) gemessene erste Länge (L1) aufweist und das zweite Förderelement (12) eine entlang der Vorwärtsrichtung (D) gemessene zweite Länge (L2) aufweist, wobei die erste Länge (L1) größer als die zweite Länge (L2) ist, wobei die Fördereinheit ferner eine Ordnungsvorrichtung (19), die die Packungen (2) auf der Fördervorrichtung (3) mit einem vorgegebenen Abstand voneinander anordnet, umfasst, wobei das erste Förderelement (7) einen ersten Einlassbereich (33) aufweist, in dem es beginnt, mit den Packungen (2) in Wechselwirkung zu treten, wobei das zweite Förderelement (12) einen zweiten Einlassbereich (35) aufweist, in dem es beginnt, mit den Packungen (2) in Wechselwirkung zu treten, wobei das erste Förderelement (7) und das zweite Förderelement (12) einander gegenüberliegen und derart entlang der Vorwärtsrichtung (D) angeordnet sind, das sich der erste Einlassbereich (33) näher bei der Ordnungsvorrichtung (19) befindet als der zweite Einlassbereich (35).

2. Fördereinheit nach Anspruch 1, wobei die erste Geschwindigkeit 15-25 % kleiner als die zweite Geschwindigkeit ist.

3. Fördereinheit nach Anspruch 2, wobei die erste Geschwindigkeit 20 % kleiner als die zweite Geschwindigkeit ist.

4. Fördereinheit nach Anspruch 1 oder 2, wobei die zweite Geschwindigkeit im Bereich von 15-50 Meter pro Minute liegt.

5. Fördereinheit nach einem der vorhergehenden Ansprüche, die ferner eine zweite Antriebseinheit (38) umfasst, die das zweite Förderelement (12) entlang der Vorwärtsrichtung (D) mit einer dritten Geschwindigkeit antreibt, wobei die dritte Geschwindigkeit höher als die erste Geschwindigkeit ist.

6. Fördereinheit nach Anspruch 5, wobei die dritte Geschwindigkeit gleich der zweiten Geschwindigkeit ist.

7. Fördereinheit nach einem der vorhergehenden Ansprüche, wobei das zweite Förderelement (7) ein Band (13) mit hohem Haftvermögen umfasst, das dafür ausgelegt ist, mit den Packungen (2) in Wechselwirkung zu treten.

8. Fördereinheit nach einem der vorhergehenden Ansprüche, die ferner eine Führungsanordnung (30) umfasst, die dafür ausgelegt ist, die Packungen (2) zu führen, bevor die Packungen (2) mit dem ersten Förderelement (7) in Wechselwirkung treten, während der ersten Wechselwirkung der Packungen (2) mit den vorstehenden Elementen (8) und bevor die Packungen (2) mit dem zweiten Förderelement (12) in Wechselwirkung treten.

9. Fördereinheit nach Anspruch 8, wobei die Führungsanordnung (30) ein erstes Führungselement (31), das auf derselben Seite der Fördervorrichtung (3) angeordnet ist wie das erste Förderelement (7), und ein zweites Führungselement (33), das auf derselben Seite der Fördervorrichtung (3) angeordnet ist wie das zweite Förderelement (12), umfasst.

10. Fördereinheit nach Anspruch 9, wobei das erste Führungselement (31) teilweise unter dem ersten Förderelement (7) angeordnet ist, so dass die vorstehenden Elemente (8) im Einsatz das erste Führungselement (31) nicht störend beeinflussen.

11. Fördereinheit nach Anspruch 9 oder 10, wobei die Ordnungsvorrichtung (19) entlang der Vorwärtsrichtung (D) vor dem ersten Förderelement (7) und dem zweiten Förderelement (12) angeordnet ist und dafür ausgelegt ist, eine Lücke zwischen den Packungen (2) auf der Fördervorrichtung (3) zu erzeugen, wobei das erste Führungselement (31) zwischen der Ordnungsvorrichtung und dem ersten Förderelement (7) eingefügt ist und das erste Förderelement (7) und das zweite Führungselement (32) zwischen der Ordnungsvorrichtung und dem zweiten Förderelement (12) eingefügt sind.

12. Fördereinheit nach einem der vorhergehenden Ansprüche, wobei die Fördervorrichtung (3) eine flexible Förderanordnung (4) umfasst, die um Scheibenelemente gewunden sind, die im Wesentlichen horizontale Achsen aufweisen, wobei das erste Förderelement (7) eine erste flexible Förderanordnung (9) umfasst, die um Scheibenelemente (16), die im Wesentlichen vertikale Achsen (A) aufweisen, gewunden ist, und das zweite Förderelement (12) eine zweite flexible Förderanordnung (13) umfasst, die um Scheibenelemente (17), die im Wesentlichen vertikale Achsen (B) aufweisen, gewunden ist.

13. Fördereinheit nach Anspruch 12, wobei die erste flexible Förderanordnung (9) einen ersten aktiven Zweig (10) umfasst, der dafür ausgelegt ist, im Einsatz mit einem ersten Seitenbereich (28) der Packungen (2) in Wechselwirkung zu treten, und die zweite flexible Förderanordnung (13) einen zweiten aktiven Zweig (13) umfasst, der dafür ausgelegt ist, im Einsatz mit einem zweiten Seitenbereich (29) der Packungen (2) in Wechselwirkung zu treten, wobei das vorstehende Element (8) dafür ausgelegt ist, im Einsatz mit einer Rückwand (41) der Packungen (2), die entlang der Vorwärtsrichtung (D) hinter dem ersten Seitenbereich (28) und dem zweiten Seitenbereich (29) angeordnet ist, in Wechselwirkung zu treten.

14. Aufbringeinrichtung zum Aufbringen von Öffnungsvorrichtungen (43) an Packungen (2), die eine Aufbringeinheit (42) zum Aufbringen der Öffnungsvorrichtungen (43) auf die Packungen (2) und eine Fördereinheit (1) nach einem der Ansprüche 1 bis 13 umfasst.

15. Verfahren zum Befördern von Packungen (2), das die folgenden Schritte umfasst: den Schritt des Tragens der Packungen (2) auf einer Fördervorrichtung (3) und des Vorwärtsbewegens der Packungen (2) entlang einer Vorwärtsrichtung (D), den Schritt des Bereitstellens eines ersten Förderelements (7) und eines zweiten Förderelements (12), die auf gegenüberliegenden Seiten der Fördervorrichtung (3) angeordnet sind, wobei das erste Förderelement (7) vorstehende Elemente (8) umfasst, die von dem Förderelement (8) vorstehen und dafür ausgelegt sind, mit den Packungen (2) in Wechselwirkung zu treten, wobei das Verfahren ferner den Schritt des Antreibens der Fördervorrichtung (3) entlang der Vorwärtsrichtung (D) mit einer ersten Geschwindigkeit und den Schritt des weiteren Antreibens des ersten Förderelements (7) entlang der Vorwärtsrichtung (D) mit einer zweiten Geschwindigkeit umfasst, wobei die zweite Geschwindigkeit höher als die erste Geschwindigkeit ist, so dass die vorstehenden Elemente (8) im Einsatz die Packungen (2) entlang der Vorwärtsrichtung (D) schieben, wobei das erste Förderelement (7) eine entlang der Vorwärtsrichtung (D) gemessene erste Länge (L1) aufweist und das zweite Förderelement (12) eine entlang der Vorwärtsrichtung (D) gemessene zweite Länge (L2) aufweist, wobei die erste Länge (L1) größer als die zweite Länge (L2) ist, wobei das Verfahren ferner den Schritt des Anordnens der Packungen (2) auf der Fördervorrichtung (3) mit einem vorgegebenen Abstand voneinander mittels einer Ordnungsvorrichtung (19) umfasst, wobei das erste Förderelement (7) einen ersten Einlassbereich (33) aufweist, in dem es beginnt, mit den Packungen (2) in Wechselwirkung zu treten, wobei das zweite Förderelement (12) einen zweiten Einlassbereich (35) aufweist, in dem es beginnt, mit den Packungen (2) in Wechselwirkung zu treten, wobei das erste Förderelement (7) und das zweite Förderelement (12) einander gegenüberliegen und derart entlang der Vorwärtsrichtung (D) angeordnet sind, das sich der erste Einlassbereich (33) näher bei der Ordnungsvorrichtung (19) befindet als der zweite Einlassbereich (35).

## Revendications

1. Unité de convoyage pour transporter des paquets (2), comprenant un dispositif de transport (3) qui supporte lesdits paquets (2) et fait avancer lesdits paquets (2) le long d'une direction d'avancement (D), un premier élément de transport (7) et un second élément de transport (12) agencés sur des côtés opposés dudit dispositif de transport (3), ledit premier élément de transport (7) comprenant des éléments saillants (8) faisant saillie à partir dudit premier élément de transport (7) et agencés de manière à interagir avec lesdits paquets (2), ladite unité de convoyage comprenant en outre un agencement d'entraînement qui entraîne ledit dispositif de transport (3) le long de ladite direction d'avancement (D) à une première vitesse et une première unité d'entraînement (37) qui entraîne ledit premier élément de transport (7) le long de ladite direction d'avancement (D) à une deuxième vitesse, dans laquelle ladite deuxième vitesse est plus élevée que ladite première vitesse de telle sorte que, lors de l'utilisation, lesdits éléments saillants (8) poussent lesdits paquets (2) le long de ladite direction d'avancement (D), ledit premier élément de transport (7) présentant une première longueur (L1) mesurée le long de ladite direction d'avancement (D), ledit second élément de transport (12) présentant une seconde longueur (L2) mesurée le long de ladite direction d'avancement (D), ladite première longueur (L1) étant plus grande que ladite seconde longueur (L2), ladite unité de convoyage comprenant en outre un dispositif de séquencement (19) qui agence lesdits paquets (2) sur ledit dispositif de transport (3) à une distance prédéterminée les uns des autres, ledit premier élément de transport (7) présentant une première zone d'entrée (33), à laquelle il commence à interagir avec lesdits paquets (2), ledit second élément de transport (12) présentant une seconde zone d'entrée (35), à laquelle il commence à interagir avec lesdits paquets (2), ledit premier élément de transport (7) et ledit second élément de transport (12) étant disposés l'un en face de l'autre et étant agencés de telle sorte que ladite première zone d'entrée (33) soit plus proche dudit dispositif de séquencement (19) que ladite seconde zone d'entrée (35), le long de ladite direction d'avancement (D).

2. Unité de convoyage selon la revendication 1, dans laquelle ladite première vitesse est 15 % à 25 % plus basse que ladite deuxième vitesse.

3. Unité de convoyage selon la revendication 2, dans laquelle ladite première vitesse est 20 % plus basse que ladite deuxième vitesse.

4. Unité de convoyage selon la revendication 1 ou 2, dans laquelle ladite deuxième vitesse se situe dans la gamme de 15 à 50 mètres par minute.

5. Unité de convoyage selon l'une quelconque des revendications précédentes, et comprenant en outre une seconde unité d'entraînement (38) qui entraîne ledit second élément de transport (12) le long de ladite direction d'avancement (D) à une troisième vitesse, ladite troisième vitesse étant plus élevée que ladite première vitesse.

6. Unité de convoyage selon la revendication 5, dans laquelle ladite troisième vitesse est égale à ladite deuxième vitesse.

7. Unité de convoyage selon l'une quelconque des revendications précédentes, dans laquelle ledit second élément de transport (7) comprend une courroie à haute adhérence (13) agencée de manière à interagir avec lesdits paquets (2).

8. Unité de convoyage selon l'une quelconque des revendications précédentes, et comprenant en outre un agencement de guidage (30) agencé de manière à guider lesdits paquets (2) avant que lesdits paquets (2) interagissent avec ledit premier élément de transport (7), pendant une première interaction desdits paquets (2) avec lesdits éléments saillants (8) et avant que lesdits paquets (2) interagissent avec ledit second élément de transport (12).

9. Unité de convoyage selon la revendication 8, dans laquelle ledit agencement de guidage (30) comprend un premier élément de guidage (31) agencé sur le même côté dudit dispositif de transport (3) que ledit premier élément de transport (7), et un second élément de guidage (33) agencé sur le même côté dudit dispositif de transport (3) que ledit second élément de transport (12).

10. Unité de convoyage selon la revendication 9, dans laquelle ledit premier élément de guidage (31) est positionné partiellement en dessous dudit premier élément de transport (7) de telle sorte que, lors de l'utilisation, lesdits éléments saillants (8) n'interfèrent pas avec ledit premier élément de guidage (31).

11. Unité de convoyage selon la revendication 9 ou 10, dans laquelle ledit dispositif de séquencement (19) est positionné en amont dudit premier dispositif de transport (7) et dudit second dispositif de transport (12) le long de ladite direction d'avancement (D) et est agencé de manière à créer un espace entre lesdits paquets (2) sur ledit dispositif de transport (3), ledit premier élément de guidage (31) étant interposé entre ledit dispositif de séquencement et ledit premier élément de transport (7) et ledit second élément de guidage (32) étant interposé entre ledit dispositif de séquencement et ledit second élément de transport (12).

12. Unité de convoyage selon l'une quelconque des revendications précédentes, dans laquelle ledit dispositif de transport (3) comprend un agencement de transport souple (4) enroulé autour d'éléments de poulie présentant un axe sensiblement horizontal, ledit premier élément de transport (7) comprend un premier agencement de transport souple (9) enroulé autour d'éléments de poulie (16) présentant un axe sensiblement vertical (A), et ledit second élément de transport (12) comprend un second agencement de transport souple (13) enroulé autour d'éléments de poulie (17) présentant un axe sensiblement vertical (B).

13. Unité de convoyage selon la revendication 12, dans laquelle ledit premier agencement de transport souple (9) comprend une première branche active (10) agencée de manière à interagir, lors de l'utilisation, avec une première région latérale (28) desdits paquets (2), ledit second agencement de transport souple (13) comprend une seconde branche active (14) agencée de manière à interagir, lors de l'utilisation, avec une seconde région latérale (29) desdits paquets (2), ledit élément saillant (8) étant agencé de manière à interagir, lors de l'utilisation, avec une paroi arrière (41) desdits paquets (2) positionnée en aval de ladite première région latérale (28) et de ladite seconde région latérale (29) le long de ladite direction d'avancement (D).

14. Appareil d'application pour appliquer des dispositifs d'ouverture (43) à des paquets (2), comprenant une unité d'application (42) pour appliquer lesdits dispositifs d'ouverture (43) auxdits paquets (2) et une unité de convoyage (1) selon l'une quelconque des revendications 1 à 13.

15. Procédé pour transporter des paquets (2), comprenant l'étape consistant à supporter lesdits paquets (2) sur un dispositif de transport (3) et à faire avancer lesdits paquets (2) le long d'une direction d'avancement (D), l'étape consistant à fournir un premier élément de transport (7) et un second élément de transport (12) agencés sur des côtés opposés dudit dispositif de transport (12), ledit premier élément de transport (7) comprenant des éléments saillants (8) faisant saillie à partir dudit élément de transport (8) et agencés de manière à interagir avec lesdits paquets (2), le procédé comprenant en outre l'étape consistant à entraîner ledit dispositif de transport (3) le long de ladite direction d'avancement (D) à une première vitesse et l'étape consistant à entraîner en outre ledit premier élément de transport (7) le long de ladite direction d'avancement (D) à une deuxième vitesse, dans lequel ladite deuxième vitesse est plus élevée que ladite première vitesse de telle sorte que, lors de l'utilisation, lesdits éléments saillants (8) poussent lesdits paquets (2) le long de ladite direction d'avancement (D), ledit premier élément de transport (7) présentant une première longueur (L1) mesurée le long de ladite direction d'avancement (D), ledit second élément de transport (12) présentant une seconde longueur (L2) mesurée le long de ladite direction d'avancement (D), ladite première longueur (L1) étant plus grande que ladite seconde longueur (L2), ledit procédé comprenant en outre l'étape consistant à agencer lesdits paquets (2) sur ledit dispositif de transport (3) à une distance prédéterminée les uns des autres au moyen d'un dispositif de séquencement (19), ledit premier élément de transport (7) présentant une première zone d'entrée (33), à laquelle il commence à interagir avec lesdits paquets (2), ledit second élément de transport (12) présentant une seconde zone d'entrée (35), à laquelle il commence à interagir avec lesdits paquets (2), ledit premier élément de transport (7) et ledit second élément de transport (12) étant disposés l'un en face de l'autre et étant agencés de telle sorte que ladite première zone d'entrée (33) soit plus proche dudit dispositif de séquencement (19) que ladite seconde zone d'entrée (35), le long de ladite direction d'avancement (D).
